(19) Europäisches Patentamt
European Patent Office
Office européen des brevets

(11) Publication number: 0 152 250 A2

# (12) EUROPEAN PATENT APPLICATION

(21) Application number: 85300727.6

(22) Date of filing: 04.02.85

(51) Int. Cl.[4]: C 04 B 7/153

(30) Priority: 03.02.84 GB 8402877

(43) Date of publication of application: 21.08.85 Bulletin 85/34

(84) Designated Contracting States: BE DE FR GB NL

(71) Applicant: NATIONAL RESEARCH DEVELOPMENT CORPORATION
101 Newington Causeway
London SE1 6BU(GB)

(72) Inventor: Majumdar, Amalendu Jyoti
1A Netherway
St. Albans Hertfordshire AL3 4NE(GB)

(72) Inventor: Singh, Bahadur
59 Kelmscott Crescent
Watford Hertfordshire WD1 8NG(GB)

(74) Representative: Colmer, Stephen Gary
Patent Department National Research Development Corporation 101 Newington Causeway
London SE1 6BU(GB)

## (54) Cement compositions.

(57) A hydraulic cement-forming composition which comprises granulated blastfurnace slag and, as activator therefor, a composition comprising $C_{12}A_7$ or $C_{11}A_7.CaX_2$ wherein X represents a halogen atom.

EP 0 152 250 A2

Croydon Printing Company Ltd

CEMENT COMPOSITIONS

This invention relates to cement compositions; more particularly, this invention relates to hydraulic cement-forming compositions comprising granulated blastfurnace slag; and to hardened masses formed therefrom by addition of water.

Granulated blastfurnace slag (GBFS) is already used in the cement industry either as a diluent for Ordinary Portland Cement (OPC) in the production of Portland Blastfurnace Slag Cement (PBFC) or in the manufacture of Supersulphated Cement. The energy cost of producing conventional hydraulic cement-forming compositions is high and there is increasing pressure to extend such compositions with cheaper materials: for example, GBFS. However, GBFS is found to react slowly with the $Ca^{+2}$ ions released from hydraulic cement-forming compositions when these are hydrated. The rate of reaction can be enhanced by grinding the GBFS to very fine particle size but such grinding processes themselves consume high amounts of energy and thereby reduce the cost effectiveness of the GBFS extender. If such extra grinding is not undertaken the early strength of the resulting hardened masses formed by addition of water to the compositions comprising GBFS is relatively low.

This invention seeks to provide a hydraulic cement-forming composition comprising granulated blastfurnace slag and exhibiting high early strength.

According, therefore, to one aspect of this invention there is provided a hydraulic cement-forming composition which comprises granulated blastfurnace slag and, as activator therefor, a composition comprising $C_{12}A_7$, $C_{11}A_7.CaX_2$ wherein X represents a halogen atom, preferably a fluorine atom, or a mixture thereof.

By "granulated blastfurnace slag" is meant herein the glassy by-product obtained in the manufacture of pig-iron which is either quenched in water, and preferably dried and ground, or pelletised (e.g. the product *ex* Tarmac). The GBFS is of the composition suitable for use with Portland cement in blended cement and comprises lime, silica and alumina. It may also contain minor amounts of other components including magnesia, iron and manganese oxides and some sulphide. The percentage by weight of each component will generally lie within the range:

| | |
|---|---|
| CaO | 28% to 50% |
| $SiO_2$ | 28% to 38% |
| $Al_2O_3$ | 5% to 24% |
| MgO | up to 21% |
| $Fe_2O_3$ | up to 4% |
| MnO | up to 3% |
| S | up to 3% |

The granulated blastfurnace slag should suitably have a specific surface (Lea and Nurse) > 3,500 $cm^2g^{-1}$, desirably > 4,000 $cm^2g^{-1}$ and preferably > 4,300 $cm^2g^{-1}$. It may be replaced, at least in part, by a natural or synthetic pozzolana; for example, pulverised fuel ash.

It is preferred that the activator is $C_{12}A_7$; for example, as prepared, in known manner, to provide an essentially binary composition of CaO and $Al_2O_3$ wherein the percentage by weight of $Al_2O_3$ is from 37 to 65%, preferably from 48% to 54%. It is especially preferred that the $C_{12}A_7$ is the substantially pure, crystalline compound.

In accordance with a preferred aspect of the invention it is desirable that the composition comprising $C_{12}A_7$ is present in an amount providing from 90 to 20% by weight of the hydraulic cement-forming composition of $C_{12}A_7$; preferably, the amount is from 70 to 30% by weight, especially from 60 to 40% by weight.

This invention also provides a hydraulic cement-forming composition according to any preceding claim which also comprises sand and/or aggregate.

This invention further provides a hardened cementitious mass formed by addition of water to a composition according to any of the preceding claims, for example formed as a pre-cast structure.

The following Examples illustrate the invention.

EXAMPLE 1

$C_{12}A_7$ was produced in the laboratory by mixing $Al_2O_3$ and $CaCO_3$ (both analytical reagent grade) in the molar ratio 12:7; and calcining the mixture at a temperature from 1300°-1350°C. The clinker so formed was then ground to an average particle size of less than 150 microns and refired at the same temperature. This process was repeated twice and the final clinker was ground to an average particle size of less than 150 microns. The product had a residual free lime content of 0.7% by weight.

The $C_{12}A_7$ was next mixed with GBFS in the weight ratios shown in Table 1 below. Water was added in a water/solid (w/s) weight ratio of 0.35 and the hydraulic cement-forming composition was cast to form 10 mm test cubes.

The compressive strengths of the test cubes were measured at intervals after storing under water at 20°C. The results are shown in Table 1 below.

For comparison, results using GBFS alone and Supersulphate Cement alone are included.

TABLE 1

| MATRIX | ADDITIVE | ADDITIVE CONTENT (WT. %) | W/S RATIO | COMPRESSIVE STRENGTH IN MPa[1] | | | | |
|---|---|---|---|---|---|---|---|---|
| | | | | 24 HOURS (MOIST AIR) | 7 DAYS WATER 20°C | 28 DAYS WATER 20°C | 180 DAYS WATER 20°C | 1 YEAR WATER 20°C |
| - | $C_{12}A_7$ | 100 | 0.4 | 30.8 | 41.7 | 46.3 | 52.5 | 24.1 |
| GBFS | $C_{12}A_7$ | 90 | " | 36.6 | 37.5 | 54.0 | 75.5 | 55.5 |
| " | " | 80 | 0.35 | 39.3 | 55.9 | 61.8 | 75.2 | 68.9 |
| " | " | 70 | " | 38.6 | 50.5 | 60.0 | 62.1 | 73.3 |
| " | " | 60 | " | 30.3 | 49.1 | 59.5 | 80.6 | 68.1 |
| " | " | 50 | " | 34.1 | 49.2 | 70.6 | 74.4 | 63.8 |
| " | " | 40 | " | 32.1 | 44.2 | 65.7 | 81.2 | 85.6 |
| " | " | 30 | " | 20.9 | 40.0 | 60.0 | 72.8 | 69.1 |
| " | " | 20 | " | 10.3 | 30.9 | 51.1 | 72.6 | 72.6 |
| " | " | 10 | " | 3.6 | 4.8 | 5.4 | 7.0 | 12.2 |
| OPC | - | - | " | 26.3 | 70.8 | 94.2 | 128.3 | |
| SSC (sealithor) | - | - | " | 6.1 | 63.4 | 87.7 | 102 | 100.5 |
| GBFS (4380 $cm^2/g$) | - | - | 0.25 | 0.14[2] | 0.37[2] | 0.42[2] | - | - |

1 Each reported value is the average of 2 or 3 tests

2 Stored in dry air

It will be seen that when $C_{12}A_7$ addition exceeds 10% by weight the 24-hour strengths are greater than those of Supersulphated Cement; and that when $C_{12}A_7$ addition is about 50% by weight the 28-day strength is a maximum: the 24-hour strength of this mixture is nearly six times that of Supersulphated cement.

It will be particularly noted that both the early and late strengths exhibited for composition comprising from 90 to 40% by weight $C_{12}A_7$ are greater than those of pure $C_{12}A_7$ or GBFS alone.

EXAMPLE 2

In this Example, hydraulic cement-forming compositions from the preferred range of this invention were mixed at differing (w/s) ratios; cast into cubes as aforesaid; and the compressive strengths of the cubes were then determined. The results are shown in Table 2.

TABLE 2

| RATIO GBFS: $C_{12}A_7$ (WT. %) | W/S RATIO | COMPRESSIVE STRENGTH IN MPa | | | | | | |
|---|---|---|---|---|---|---|---|---|
| | | 24 HOURS (MOIST AIR) | 7 DAYS | | | 28 DAYS | | |
| | | | AIR | WATER | WATER (30°C) | AIR | WATER | WATER (30°C) |
| 40:60 | 0.35 | 32.1 | 57 | 47 | 50 | 60 | 63 | 54 |
| | 0.40 | 27.4 | 54 | 40 | 46 | 57 | 57 | 51 |
| | 0.50 | 21.8 | 40 | 33 | 37 | 40 | 54 | 35 |
| 50:50 | 0.35 | 30.0 | 45 | 46 | 42 | 53 | 68 | 63 |
| | 0.40 | 27.8 | 49 | 45 | 50 | 50 | 64 | 60 |
| | 0.50 | 17.6 | 30 | 26 | 36 | 31 | 40 | 36 |
| 60:40 | 0.35 | 29.5 | 48 | 46 | 58 | 54 | 68 | 71 |
| | 0.40 | 24.8 | 44 | 39 | 50 | 45 | 55 | 65 |
| | 0.50 | 18.9 | 31 | 30 | 37 | 34 | 42 | 44 |

TABLE 2 (Continued)

| RATIO GBFS: $C_{12}A_7$ (WT. %) | W/S RATIO | COMPRESSIVE STRENGTH IN MPa | | | | | |
|---|---|---|---|---|---|---|---|
| | | 180 DAYS | | | 1 YEAR | | |
| | | AIR | WATER | WATER (30°C) | AIR | WATER | WATER (30°C) |
| 40:60 | 0.35 | 59 | 70 | 69 | 54 | 56 | 65 |
| | 0.40 | 51 | 74 | 66 | 59 | 67 | 53 |
| | 0.50 | 39 | 49 | 48 | 38 | 41 | 44 |
| 50:50 | 0.35 | 57 | 72 | 81 | 57 | 71 | 78 |
| | 0.40 | 54 | 67 | 72 | 52 | 67 | 69 |
| | 0.50 | 33 | 40 | 50 | 32 | 55 | 45 |
| 60:40 | 0.35 | 51 | 76 | - | 61 | 84 | 68 |
| | 0.40 | 48 | 73 | 83 | 51 | 74 | 76 |
| | 0.50 | 38 | 51 | 56 | 36 | 63 | 62 |

It will be noticed, in particular, that the compressive strengths of the compositions comprising high loadings of GBFS and maintained in water continued to improve with time and showed no sign of determination.

EXAMPLE 3

In this Example, a hydraulic cement-forming composition of this invention wherein the weight ratio GBFS:$C_{12}A_7$ was 1:1 (w/s 0.35) was cast into cubes as aforesaid; immersed in water at differing temperatures; and the compressive strengths of the cubes were then determined. The results are shown in Table 3.

TABLE 3

| WATER TEMPERATURE (°C) | COMPRESSIVE STRENGTH IN MPa | | | | | |
|---|---|---|---|---|---|---|
| | 24 HOURS | 4 DAYS | 8 DAYS | 20 DAYS | 28 DAYS | 60 DAYS |
| 20 | 36[1] | 43[1] | 52[1] | 65 | 74 | 74 |
| 30 | 45 | 60 | 64 | 64[1] | 65[1] | 74 |
| 40 | 42 | 49 | 50 | 62 | 63[1] | 67 |
| 50 | 33 | 37 | 35 | 45 | 48 | 60 |

[1] Interpolated result

EXAMPLE 4

In this Example, a 1:3 by weight mortar of a hydraulic cement-forming composition of the invention (weight ratio GBFS:$C_{12}A_7$ 1:1) at a water/cement ratio of 0.40 was cast, with vibration, into cubes; and the compressive strengths of the cubes were then determined in accordance with BS 4550.

The results are shown in Table 4.

TABLE 4

| SAMPLE COMPOSITION | COMPRESSIVE STRENGTH IN MPa | | | | |
|---|---|---|---|---|---|
| | 24 HOURS | 3 DAYS | 7 DAYS | 28 DAYS | 180 DAYS |
| GBFS:$C_{12}A_7$ 1:1 | 25.6 | 21.1 | 31.2 | 33.0 | 48.2 |
| OPC (BS 12:1958) | - | 15.1 | 23.4 | - | - |
| PBFC+ (BS146:1958) | - | 15.1 | 23.4 | 34.4 | - |

+See page 1.

It is found that the initial and final setting times of the composition, effected under BS procedure, were 11 minutes and 20 minutes, respectively. This compares favourably with the very rapid hardening of regulated set cements.

The composition of this invention may comprise an accelerator and/or retarder effective to provide a desired setting time sufficient for the purpose for which the composition was intended.

CLAIMS

1. A hydraulic cement-forming composition which comprises granulated blastfurnace slag and, as activator therefor, a composition comprising $C_{12}A_7$ or $C_{11}A_7.CaX_2$ wherein X represents a halogen atom.

2. A hydraulic cement-forming composition according to Claim 1 wherein the granulated blastfurnace slag has a composition comprising CaO from 28 to 50% by weight; $SiO_2$ from 28 to 38% by weight; and $Al_2O_3$ from 5 to 24% by weight.

3. A hydraulic cement-forming composition according to Claim 1 or 2 wherein the granulated blastfurnace slag has specific surface > 4,000 $cm^2g^{-1}$.

4. A hydraulic cement-forming composition according to any preceding claim wherein the activator composition comprises $C_{12}A_7$ or $C_{11}A_7.CaF_2$.

5. A hydraulic cement-forming composition according to Claim 4 wherein the activator composition comprises $C_{12}A_7$.

6. A hydraulic cement-forming composition according to Claim 5 which is an essentially binary composition of CaO and $Al_2O_3$ and wherein the percentage by weight of $Al_2O_3$ is from 37 to 65%.

7. A hydraulic cement-forming composition according to Claim 6 wherein the percentage by weight of $Al_2O_3$ is from 48 to 54%.

8. A hydraulic cement-forming composition according to Claim 7 wherein the composition comprising $C_{12}A_7$ is the substantially pure compound.

9. A hydraulic cement-forming composition according to any preceding claim wherein the composition comprising $C_{12}A_7$ is present in an amount providing from 90 to 20% by weight of the hydraulic cement-forming composition of $C_{12}A_7$.

10. A hydraulic cement-forming composition according to Claim 8 wherein the amount is from 60 to 40% by weight.

11. A hydraulic cement-forming composition according to any preceding calim which also comprises sand and/or aggregate.

12. A hardened cementitious mass formed by addition of water to a composition according to any of the preceding claims.

13. A hardened cementitious mass according to Claim 12 which is a pre-cast structure.